# EUROPÄISCHE PATENTANMELDUNG

(11) **EP 3 431 950 A1**
(43) Veröffentlichungstag der Anmeldung: **23.01.2019**
(21) Anmeldenummer: 18185726.9
(22) Anmeldetag: 04.06.2014
(51) Int. Cl.: G01M 9/04, A63G 31/00

(54) **LUFTUMLENKEINRICHTUNG**

(62) Teilanmeldung aus: 14732104.6
(71) Anmelder: Indoor Skydiving Germany GmbH, 45966 Gladbeck (DE)
(72) Erfinder: NEBE, Boris, 46236 Bottrop (DE); DOHR, Manuel, 42781 Haan (DE)
(74) Vertreter: Zech, Stefan Markus

(57) **Zusammenfassung**

Die Erfindung betrifft eine Wärmeaustauschvorrichtung zur Anordnung innerhalb eines Luftführungskanals, umfassend mehrere Segmente, wobei ein Segment umfasst:
- eine Vielzahl von Lamellen mit zumindest einem Hohlraum zur Durchleitung einer Flüssigkeit,
- ein Einlassrohr zum Zuführen der Flüssigkeit in die Lamellen und
- ein Auslassrohr zum Abführen der Flüssigkeit aus den Lamellen wobei die Segmente in Richtung der Flüssigkeitsdurchleitung nebeneinander befestigt sind.

## Beschreibung

Die vorliegende Erfindung betrifft eine Luftumlenkeinrichtung ausgebildet und bestimmt zum Einbau in einen Freifallsimulator mit in sich geschlossenem Luftkreislauf. Die Erfindung betrifft außerdem einen Freifall-Simulator mit in sich geschlossenem Luftkreislauf und ein Verfahren zum Trocknen, Kühlen und/oder Erwärmen eines Luftstroms in einem Freifall-Simulator mit in sich geschlossenem Luftkreislauf.

Bei einem Freifall-Simulator mit in sich geschlossenem Luftkreislauf handelt es sich um eine Einrichtung, die ausgelegt ist, um eine Person in einem - in der Regel steuerbaren - vertikal aufsteigenden Luftstrom, der durch eine Schwebekammer hindurchströmt, in einer Schwebeposition zu halten. Der Luftstrom wird über einen Luftführungskanal nach seinem Austritt aus einer oberen Öffnung der Schwebekammer zu einer unteren Öffnung der Schwebekammer zurückgeführt, so dass ein in sich geschlossener Kreislauf gebildet wird.

Ein typischer Effekt dieser so genannten geschlossenen Freifall-Simulatoren besteht darin, dass aufgrund von Druckverlusten die Luft innerhalb des Simulators erwärmt wird, was verschiedene Probleme mit sich bringt. Zum einen kann die Überhitzung der Luft von den den Simulator nutzenden Personen als unangenehm empfunden werden bzw. bei starker Überhitzung auch zu gesundheitlichen Schäden führen, zum anderen führt die Erwärmung der Luft zu einer Abnahme der Luftdichte, was wiederum die Kraft, die die schwebende Person im Gleichgewicht hält, herabsetzt. Insgesamt ist wegen der Kombination von oftmals nebeneinander angeordneten Gebläsen und bedarfsweise öffenbaren Belüftungen ein erhöhter Steuerungsaufwand vonnöten.

Um einen geschlossenen Luftkreislauf sicherzustellen, wird typischerweise ein Luftführungskanal vorgesehen, bei dem in geraden Abschnitten, vorzugsweise in einem vertikalen Rückführungskanal, mindestens ein Gebläse angeordnet ist und in Ecken des Luftführungskanals Luftumlenkvorrichtungen vorgesehen sind. Insbesondere können dabei Umlenklamellen vorgesehen sein.

Im Stand der Technik ist vorgeschlagen worden, die Umlenklamellen so auszubilden, dass diese auch einen Wärmeaustausch, insbesondere eine Abkühlung der umgelenkten Luft bewirken. Es hat sich allerdings herausgestellt, dass es sehr aufwändig sein kann, die als Wärmetauscher ausgebildeten Lamellen im Eckbereich des Luftführungskanals anzuordnen und in zuverlässiger Weise mit einem Kühlfluid zu versorgen.

Der Erfindung liegt die Aufgabe zu Grunde, eine Luftumlenkeinrichtung zur Anordnung innerhalb eines Luftführungskanals und einen Freifall-Simulator mit in sich geschlossenem Luftkreislauf anzugeben, wobei der Installationsaufwand reduziert ist und die Temperatur im Luftführungskanal wirkungsvoll reduziert wird. Diese Aufgabe wird durch eine Luftumlenkeinrichtung nach Patentanspruch 1, einen Freifall-Simulator nach Patentanspruch 8 und ein Verfahren nach Patentanspruch 9 gelöst.

Die Aufgabe wird nach einem ersten Aspekt insbesondere gelöst durch eine Luftumlenkeinrichtung ausgebildet und bestimmt zum Einbau in einen Freifallsimulator mit in sich geschlossenem Luftkreislauf, mit der ein Luftstrom um einen Winkel von 60° bis 120°, vorzugsweise um etwa 90°, umgelenkt wird, wobei die Luftumlenkeinrichtung ein oder mehrere Segmente umfasst, wobei jedes Segment umfasst:
- eine Vielzahl von ein Umlenkprofil zur Umlenkung des Luftstroms ausbildenden Lamellen mit zumindest einem Hohlraum zur Durchleitung eines Fluids,
- ein für alle Lamellen des Segments gemeinsames Einlassrohr zum Zuführen des Fluids in die Lamellen und
- ein für alle Lamellen des Segments gemeinsames Auslassrohr zum Abführen Fluids aus den Lamellen,
wobei das Fluid die Lamellen eines Segments immer in der gleichen Richtung, beispielsweise immer von der linken Seite des Segments zur rechten Seite oder umgekehrt durchströmt, derart, dass die Segmente in Parallelanordnung zueinander von Fluid durchströmbar sind und wobei die Lamellen eines Segments an dem Einlassrohr und/oder dem Auslassrohr stoffschlüssig, insbesondere durch Verschweißen, vorzugsweise durch Laser-Verschweißen, befestigt sind.

Hierdurch lässt sich eine besonders stabile und zugleich fluid- bzw. flüssigkeitsundurchlässige Befestigung der Lamellen am Einlassrohr und Auslassrohr erreichen. Im Vergleich zu einer Befestigung mit Nieten oder Schrauben sind somit auch keine weiteren Befestigungsmittel erforderlich, die sich im Laufe der Zeit lockern könnten.

Gemäß einem zweiten Aspekt der Erfindung wird die oben genannte Aufgabe gelöst durch einen Freifall-Simulator mit in sich geschlossenem Luftkreislauf, wobei der Freifall-Simulator umfasst:
- eine Schwebekammer, in welcher Personen infolge eines vertikal aufwärts gerichteten Luftstromes schweben können,
- einen im Wesentlichen geschlossenen Luftführungskanal mit mindestens einem Gebläse,
- eine im Luftführungskanal, insbesondere in einer Ecke des Luftführungskanals angeordnete Luftumlenkeinrichtung gemäß einem der Ansprüche 1 bis 7.

Gemäß einem dritten Aspekt der Erfindung wird die oben genannte Aufgabe gelöst durch ein Verfahren zum Trocknen, Kühlen und/oder Erwärmen eines Luftstroms in einem Freifallsimulator mit in sich geschlossenem Luftstrom, insbesondere mittels einer Luftumlenkeinrichtung nach einem der Ansprüche 1 bis 8, mit den Schritten:
- Aufwärmen oder Abkühlen eines Fluids,
- Zuführen des Fluids durch ein Einlassrohr,
- Durchleiten des Fluids durch eine Vielzahl von Lamellen,
- Abführen des Fluids durch ein Auslassrohr, und
- Umströmen der Lamellen mit dem Luftstrom
wobei das Fluid die Lamellen eines Segments immer in der gleichen Richtung, beispielsweise immer von der linken Seite des Segments zur rechten Seite oder umgekehrt durchströmt.

Erfindungsgemäß kann also vorgesehen sein, dass das Fluid innerhalb der Vielzahl von Lamellen quer zur Strömungsrichtung der Luft im Luftführungskanal fließt und dabei Wärme zwischen Fluid und strömender Luft ausgetauscht wird. Bei Zuführen von kühlem Fluid kommt es dabei über die Längserstreckung der Lamelle zu einer Erwärmung des Fluids.

Das Fluid durchströmt vorzugsweise die Lamellen eines Segments also in immer der gleichen Richtung, also z.B. immer von der linken Seite des Segments zur rechten Seite oder umgekehrt. Somit kann in besonders einfacher Weise das Fluid auf einer Seite des Segments zugeführt und auf der anderen Seite des Segments abgeführt werden.
Bei dem Fluid kann es sich um eine Flüssigkeit, z.B. um Leitungswasser, destilliertes Wasser, entsalztes Wasser und/oder mit antibakteriellen Mitteln versehenes Wasser handeln. Ebenso kann es sich bei der Flüssigkeit um Kühlmittel handeln.

Die Luftumlenkeinrichtung kann auch zur Kondensationstrocknung des Luftstroms eingesetzt werden. Hierzu wird ein besonders kaltes Fluid durch die Lamellen geleitet, so dass sich an der Oberfläche der Lamellen Kondenswasser bildet. Das Kondenswasser wird abgeführt und somit dem Luftstrom Feuchtigkeit entzogen. Die Abführung des Kondenswassers kann z.B. dadurch erfolgen, dass unterhalb der Lamellen ein Auffangbecken angeordnet ist. Das Auffangbecken kann dabei auch in Richtung der Luftströmungsrichtung nach hinten versetzt angeordnet sein, da das abtropfende Kondensat durch den Luftstrom verweht wird.

Im Vergleich zur Adsorptionstrocknung lässt sich somit eine einfache und kostengünstige Lufttrocknung erzielen.

Das Umlenkprofil zur Umlenkung des Luftstroms kann dadurch gebildet sein, dass jede Lamelle ein Profil aufweist, das zur Umlenkung des Luftstroms geeignet ist, z.B. durch eine Krümmung der Lamellen. Alternativ kann sich die Umlenk-Eigenschaft aber auch dadurch ergeben, dass die Lamellen so zueinander angeordnet sind, dass der Luftstrom umgelenkt wird.

Vorzugsweise sind die Lamellen zumindest eines Segments so am Einlassrohr und Auslassrohr befestigt, dass keine weitere Halterung oder Befestigung für die Lamellen erforderlich ist. In diesem Fall kann also vorgesehen sein, dass die Luftumlenkeinrichtung nur aus Lamellen und Einlass- bzw. Auslassrohren besteht. Die erfindungsgemäße Luftumlenkeinrichtung hat den Vorteil, dass sie besonders einfach installiert werden kann.

In einer weiteren Ausgestaltung der Erfindung ist vorgesehen, dass die Lamellen dazu ausgebildet sind, die Luft umzulenken, insbesondere um einen Winkel von 90°. Hierdurch dient die Luftumlenkeinrichtung sowohl zum Austausch von Wärme als auch zum Umlenken der Luft, z.B. in einer Ecke des Luftführungskanals.

In einer besonders bevorzugten Ausgestaltung der Erfindung ist dabei vorgesehen, dass zumindest eine der Lamellen in Richtung der Luftströmungsrichtung gekrümmt ausgebildet ist, wobei insbesondere auch der Hohlraum der Lamelle in diese Richtung gekrümmt ausgebildet ist. Es versteht sich, dass die Umlenkung der Luft durch verschiedene Arten von Krümmung erzielt werden kann.

In einer weiteren Ausgestaltung der Erfindung ist vorgesehen, dass zumindest eine der Lamellen aus Aluminium, insbesondere aus einem Aluminium-Strangpressprofil gefertigt ist. Aluminium ist leicht, weist einen hohen Wärmeleitungskoeffizienten auf und lässt sich einfach verarbeiten. Es ist somit als Material für die Lamellen besonders geeignet.

In einer weiteren Ausgestaltung der Erfindung ist vorgesehen, dass die Lamellen zumindest eines der Segmente zwischen 0,5m und 4m, vorzugsweise zwischen 1m und 2m lang sind.

In einer weiteren Ausgestaltung der Erfindung ist vorgesehen, dass zwischen 3 und 5, insbesondere 4 Segmente, nebeneinander befestigt sind.

In einer weiteren Ausgestaltung der Erfindung ist vorgesehen, dass das Einlass- und/oder Auslassrohr einen Querschnitt aufweist, der abschnittsweise gerade ausgebildet ist, insbesondere rechteckig ausgebildet ist, wobei vorzugsweise zumindest eine der Lamellen an einem geraden Abschnitt des Einlass- und/oder Auslassrohrs befestigt ist.

An einem Abschnitt, an dem das Einlass- und/oder Auslassrohr keine Krümmung aufweist, lassen sich die Lamellen besonders einfach und fluiddicht befestigen. Insbesondere kann somit besonders gut sichergestellt werden, dass die Hohlräume der Lamellen besonders genau mit Öffnungen in den Einlass- und/oder Auslassrohren zur Deckung gebracht werden.

In einer weiteren vorteilhaften Ausgestaltung der Erfindung ist vorgesehen, dass die Einlassrohre mehrerer Segmente mit einem gemeinsamen Versorgungsrohr verbunden sind und/oder die Auslassrohre mehrerer Segmente mit einem gemeinsamen Ableitungsrohr verbunden sind, wobei
- Versorgungsrohr und Ableitungsrohr auf der gleichen Seite der Segmente angeordnet sind oder
- Versorgungsrohr und Ableitungsrohr auf gegenüberliegenden Seiten der Segmente angeordnet sind.

Wenn Versorgungsrohr und Ableitungsrohr auf gegenüberliegenden Seiten der Segmente angeordnet sind, das Fluid innerhalb eines Segments also beispielsweise oben links zugeführt und unten rechts abgeführt wird, lässt sich eine besonders gleichmäßige Durchströmung der Lamellen mit dem Fluid erzielen.

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1: eine Querschnittsansicht einer erfindungsgemäßen Lamelle;
- Fig. 2: eine Ansicht eines Längsquerschnitts durch die Lamelle aus Fig. 1;
- Fig. 3: eine Draufsicht auf eine erfindungsgemäße Luftumlenkeinrichtung mit vier Segmenten;
- Fig. 4: eine Querschnittsansicht eines Eckbereichs eines erfindungsgemäßen Freifall-Simulators;
- Fig. 5: eine schematische Darstellung einer typischen Einbausituation einer erfindungsgemäßen Luftumlenkeinrichtung

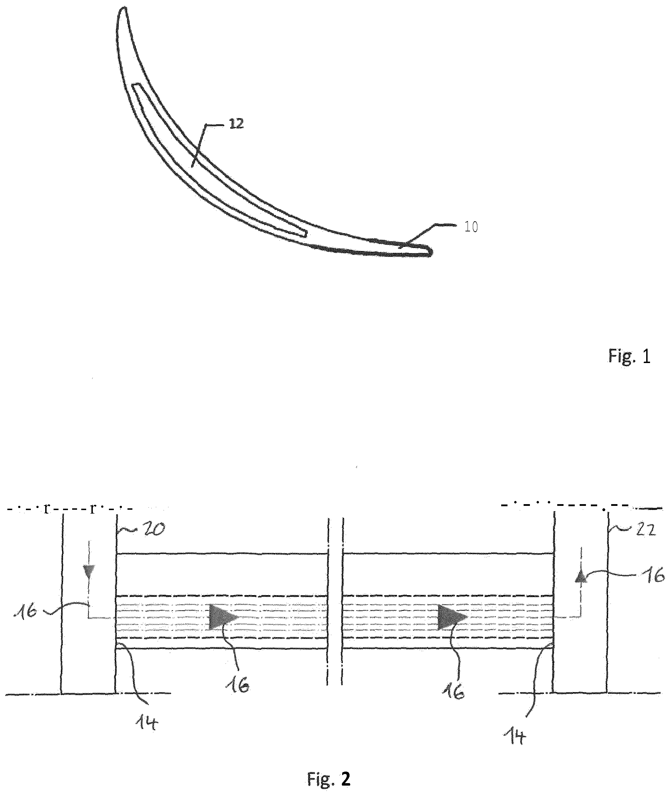

Fig. 1 zeigt den Querschnitt einer Lamelle 10 mit einem Hohlraum 12. Der Hohlraum erstreckt sich über ungefähr ein Drittel der Länge der Lamelle in Luftströmungsrichtung und weist ungefähr dieselbe Krümmung wie die Lamelle auf.

Fig. 2 zeigt einen Längsquerschnitt der Lamelle 10, wobei die Längsquerschnittslinie der Krümmung der Lamelle folgt. Die Lamelle 10 ist links mit einem Einlassrohr 20 und rechts mit einem Auslassrohr 22 verbunden, der Längsquerschnitt in Fig. 2 ebenfalls dargestellt ist. Die Fluidflussrichtung in Einlassrohr 20, Lamelle 10 und Auslassrohr 22 ist dabei durch Pfeile 16 gekennzeichnet.

Die Lamelle 10 ist durch Schweißnähte 14 am Einlassrohr 20 und am Auslassrohr 22 fluiddicht befestigt. Separate Verbindungselemente liegen nicht vor.

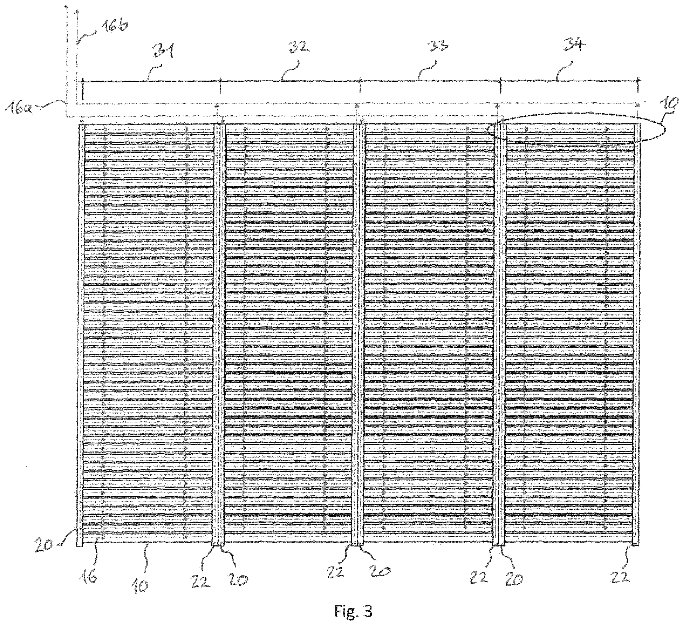

Fig. 3 zeigt eine Draufsicht auf eine erfindungsgemäße Luftumlenkeinrichtung mit Lamellen 10 gemäß Fig. 1 und Fig. 2. Die Luftumlenkeinrichtung 30 weist dabei vier Segmente 31, 32, 33, 34 auf, die jeweils ein Einlassrohr 20, ein Auslassrohr 22 und eine Vielzahl von Lamellen 10 aufweisen. Ein kaltes Fluid wird über ein Versorgungsrohr zugeführt und das durch den Wärmeluftstrom aufgewärmte Fluid durch ein Ableitungsrohr abgeführt. Versorgungsrohr und Ableitungsrohr sind dabei auf derselben Seite der Segmente angeordnet. In Fig. 3 sind Versorgungs- und Ableitungsrohr nicht dargestellt, dafür ist mit gestrichelten Linien und Pfeilen 16a, 16b der Fluidfluss in Versorgungs- und Ableitungsrohr dargestellt.

Bei der in Fig. 3 dargestellten Luftumlenkeinrichtung befinden sich die Lamellen aller Segmente im Wesentlichen in einer Ebene. Es sind aber erfindungsgemäß auch andere Anordnungen denkbar, z.B. können benachbarte Segmente versetzt zueinander angeordnet sein.

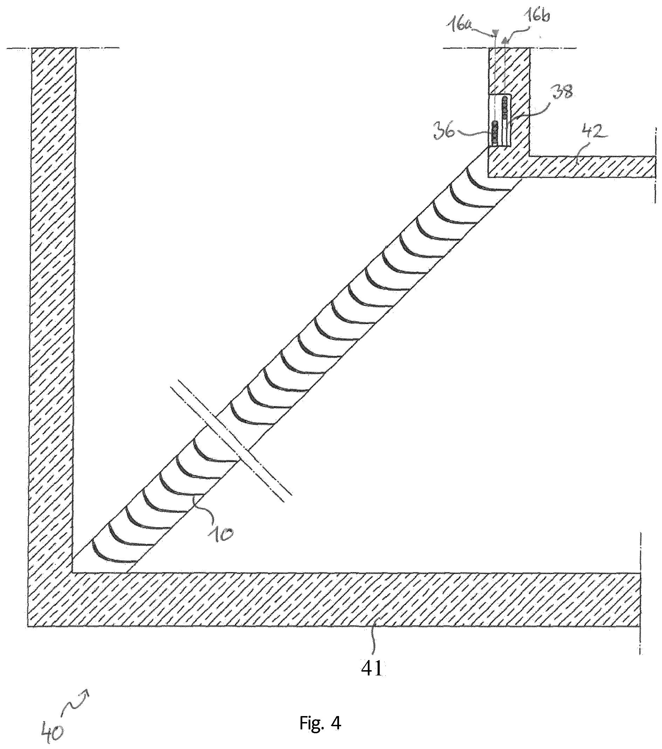

Fig. 4 zeigt einen Längsquerschnitt durch einen Eckbereich 40 eines Luftführungskanals. Dabei ist der Querschnitt einer Vielzahl von Lamellen 10 eines ersten Segments 31 einer erfindungsgemäßen Luftumlenkeinrichtung 30 sichtbar. Der Querschnitt der unteren Wand 41 und der Querschnitt der oberen Wand 42 des Luftführungskanals sind sichtbar. Dabei ist auch ersichtlich, dass in der oberen Wand 42 das Versorgungsrohr 36 und Ableitungsrohr 38 geführt werden. Die Pfeile 16a, 16b kennzeichnen dabei, wie das Fluid durch das Versorgungsrohr 36 zugeführt bzw. durch das Ableitungsrohr 38 abgeführt wird. In bestimmten Ausgestaltungen der Erfindung kann vorgesehen sein, dass dabei für jedes Segment ein eigenes Rohr verlegt ist.

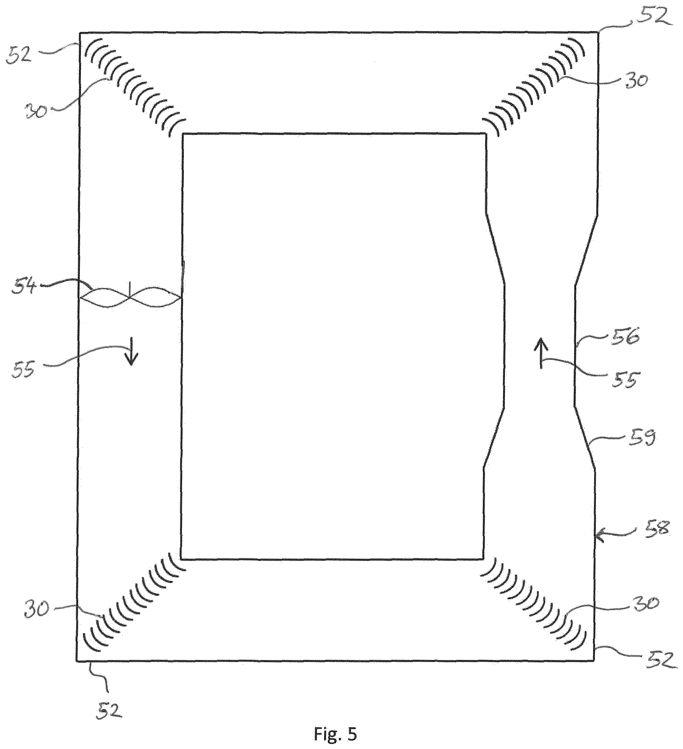

In Fig. 5 ist eine typische Einbausituation einer erfindungsgemäßen Luftumlenkeinrichtung gezeigt. Der Freifall-Simulator 50 weist dabei Luftumlenkeinrichtungen 30 in jeder der vier Ecken 52 auf. In anderen Ausgestaltungen kann auch vorgesehen sein, dass nur in einer, zwei oder drei Ecken eine Luftumlenkeinrichtung 30 angeordnet ist.

Der Ventilator 54 ist bevorzugtermaßen in einem vertikalen Bereich angeordnet und beschleunigt die Luft nach unten. Die Luftströmungsrichtung ist dabei in Fig. 5 durch die Pfeile 55 angedeutet. Die durch den Ventilator 54 beschleunigte Luft strömt dabei aufwärts durch die Flugkammer 56. Unterhalb der Flugkammer verengt sich der Luftführungskanal 58 in einem Verengungsbereich 59. Hieraus ergibt sich eine Beschleunigung des Luftstroms.

Durch die erfindungsgemäßen Luftumlenkeinrichtungen 30 kommt es zu geringeren Reibungsverlusten in den Eckbereichen und es erfolgt eine Kühlung des Luftstroms. Vorliegend ist der Luftführungskanal 58 eckig ausgestaltet und die Luftumlenkeinrichtungen 30 in den Ecken 52 angeordnet. Es sind erfindungsgemäß aber auch andere Profile des Luftführungskanals 58 und andere Anordnungen der Luftumlenkeinrichtungen 30 denkbar.

### Bezugszeichen:

- 10: Lamelle
- 11: Längsquerschnitt
- 12: Hohlraum
- 14: Schweißnähte
- 16: Fluidflussrichtung
- 20: Einlassrohr
- 22: Auslassrohr
- 30: Luftumlenkeinrichtung
- 31-34: Vier Segmente
- 36: Versorgungsrohr
- 38: Ableitungsrohr
- 40: Eckbereich
- 41: Untere Wand
- 42: Obere Wand
- 50: Freifall-Simulator
- 52: Ecke
- 54: Ventilator
- 55: Luftströmungsrichtung
- 56: Freifall-Kammer
- 58: Luftführungskanal
- 59: Verengungs-Bereich

## Patentansprüche

1. Luftumlenkeinrichtung ausgebildet und bestimmt zum Einbau in einen Freifallsimulator mit in sich geschlossenem Luftkreislauf, mit der ein Luftstrom um einen Winkel von 60° bis 120°, vorzugsweise um etwa 90°, umgelenkt wird, wobei die Luftumlenkeinrichtung ein oder mehrere Segmente umfasst, wobei ein Segment umfasst:
- eine Vielzahl von ein Umlenkprofil zur Umlenkung des Luftstroms ausbildenden Lamellen mit zumindest einem Hohlraum zur Durchleitung eines Fluids,
- ein für alle Lamellen des Segments gemeinsames Einlassrohr zum Zuführen des Fluids in die Lamellen und
- ein für alle Lamellen des Segments gemeinsames Auslassrohr zum Abführen des Fluids aus den Lamellen,
wobei das Fluid die Lamellen eines Segments immer in der gleichen Richtung, beispielsweise immer von der linken Seite des Segments zur rechten Seite oder umgekehrt, durchströmt derart, dass die Segmente in Parallelanordnung zueinander von Fluid durchströmbar sind und wobei die Lamellen zumindest eines Segments an dem Einlassrohr und/oder dem Auslassrohr stoffschlüssig, insbesondere durch Verschweißen, vorzugsweise durch Laser-Verschweißen, befestigt sind.

2. Luftumlenkeinrichtung nach einem der vorherigen Ansprüche, **dadurch gekennzeichnet, dass** zumindest eine der Lamellen in Richtung der Luftströmungsrichtung gekrümmt ausgebildet ist, wobei insbesondere auch der Hohlraum der Lamelle in diese Richtung gekrümmt ausgebildet ist.

3. Luftumlenkeinrichtung nach einem der vorherigen Ansprüche, **dadurch gekennzeichnet, dass** zumindest eine der Lamellen aus Aluminium, insbesondere aus einem Aluminiumstrangpressprofil gefertigt ist.

4. Luftumlenkeinrichtung nach einem der vorherigen Ansprüche, **dadurch gekennzeichnet, dass** die Lamellen zumindest eines der Segmente zwischen 0,5m und 4m, vorzugsweise zwischen 1m und 2m lang sind.

5. Luftumlenkeinrichtung nach einem der vorherigen Ansprüche, **dadurch gekennzeichnet, dass** zwischen drei und fünf, insbesondere vier Segmente nebeneinander befestigt sind.

6. Luftumlenkeinrichtung nach einem der vorherigen Ansprüche, **dadurch gekennzeichnet, dass** das Einlass- und/oder Auslassrohr einen Querschnitt aufweist, der abschnittsweise gerade ausgebildet ist, insbesondere rechteckig ausgebildet ist, wobei vorzugsweise zumindest eine der Lamellen an einem geraden Abschnitt des Einlass- und/oder Auslassrohrs befestigt ist.

7. Luftumlenkeinrichtung nach einem der vorherigen Ansprüche, **dadurch gekennzeichnet, dass** die Einlassrohre mehrerer Segmente mit einem Versorgungsrohr verbunden sind und/oder die Auslassrohre mehrerer Segmente mit einem Ableitungsrohr verbunden sind, wobei
- Versorgungsrohr und Ableitungsrohr auf gegenüberliegenden Seiten der Segmente angeordnet sind.

8. Freifallsimulator mit in sich geschlossenem Luftkreislauf, umfassend
- eine Schwebekammer, in welcher Personen infolge eines vertikal aufwärts gerichteten Luftstromes schweben können,
- einen im Wesentlichen geschlossenen Luftführungskanal mit mindestens einem Gebläse,
- eine im Luftführungskanal, insbesondere in einer Ecke des Luftführungskanals angeordnete Luftumlenkeinrichtung gemäß einem der Ansprüche 1 bis 8.

9. Verfahren zum Trocknen, Kühlen und/oder Erwärmen eines Luftstroms in einem Freifallsimulator mit in sich geschlossenem Luftstrom, mittels einer Luftumlenkeinrichtung nach einem der Ansprüche 1 bis 7, mit den Schritten:
- Aufwärmen oder Abkühlen eines Fluids,
- Zuführen des Fluids durch ein Einlassrohr,
- Durchleiten des Fluids durch eine Vielzahl von Lamellen,
- Abführen des Fluids durch ein Auslassrohr, und
- Umströmen der Lamellen mit dem Luftstrom wobei das Fluid die Lamellen eines Segments immer in der gleichen Richtung, beispielsweise immer von der linken Seite des Segments zur rechten Seite oder umgekehrt, durchströmt.
